# EUROPEAN PATENT APPLICATION

(11) **EP 2 053 178 A2**
(43) Date of publication of application: **29.04.2009**
(21) Application number: 08397522.7
(22) Date of filing: 17.10.2008
(51) Int. Cl.: E04D 3/35, E04D 13/16

(54) **Insulator element**

(30) Priority: 18.10.2007 FI 20075733
(71) Applicant: Thermisol oy, 38210 Vammala (FI)
(72) Inventor: Kilpeläinen, Tapio, 37120 Nokia (FI); Ahopelto, Väinö, 33960 Pirkkala (FI)
(74) Representative: Pursiainen, Timo Pekka

(57) **Abstract**

An insulator element comprising at least a first layer (1) of insulating material, which is a thermal insulation formed of synthetic polymer material. The element also comprises a second layer (2) of insulation material, which is waterproofing, and a third layer (3) of insulation material, which is provided between the first layer (1) and the second layer (2) of insulating material, to separate them. The invention also relates to a method for forming an insulator element, as well as a roof structure formed of insulator elements joined to each other.

## Description

### Field of the invention

The invention relates to an insulator element. The invention also relates to a method for forming an insulator element, as well as to a roof structure.

### Background of the invention

Plastic is commonly used in insulation plates, and one of the most common materials is closed-cell expanded polystyrene plastic, or EPS. The insulation plate can be used on top of a load-bearing structure or in a load-bearing element. In roof structures, the load-bearing structure is typically covered with an EPS plate, on top of which an intermediate layer and waterproofing are installed. Typically, the intermediate layer consists of solid mineral wool with a thickness of 20 or 30 mm, and the waterproofing is generally either modified bitumen roofing or PVC roofing. The purpose of the intermediate layer is, among other things, to protect and level out thermal stresses on the EPS insulation during installation work and to prevent damage caused by combinations of substances possibly released from roofing materials. Furthermore, thanks to the intermediate layer, the structure meets the requirements set against external fire. (With reference to roof structures, the fire resistance classes and their notations as well as the criteria for their evaluation are given, among other things, in the decision 2001/671 by the European Commission. A fire resistant structure used according to these regulations and guidelines is, for example, class B_{ROOF}(t2).)

However, the above-identified building method requires several work stages, and especially when a layer of mineral wool is applied, it is very challenging and risky in view of both the weather conditions during the installation and the later function of the structure. Therefore, a need has arisen to develop a faster construction method that involves fewer functional risks and risks related to the installation.

### Brief summary of the invention

Now, a novel insulator element has been invented that accelerates construction and acts simultaneously both as a thermal insulator and as temporary or final waterproofing.

To achieve this aim, the insulator element according to the invention is primarily characterized in what will be presented in the independent claim 1. The method according to the invention is, in turn, primarily characterized in what will be presented in the independent claim 9. The roof structure according to the invention, in turn, is primarily characterized in what will be presented in the independent claim 14. The other, dependent claims will present some preferred embodiments of the invention.

An insulator element according to the basic idea of the invention comprises a first layer of insulating material, which is a thermal insulation formed of synthetic polymer material, as well as a second layer of insulating material, which is waterproofing. Furthermore, an intermediate layer, that is, a third layer of insulating material, is provided between the first and second layers of insulating material.

The first layer of insulating material may be formed of, for example, expanded polystyrene plastic (EPS), extruded polystyrene (XPS), polyurethane, or another synthetic polymer material. The primary aim of the first layer of insulating material is to provide the element with a thermal insulating property. This is influenced, among other things, by the material and the thickness of the layer.

The second layer of insulating material may be coated fabric used as a waterproofing covering. The waterproofing covering may be, for example, bitumen roofing, but also other materials can be used. In an advantageous application, rubber bitumen roofing is used for waterproofing.

The purpose of the third layer of insulating material, *i*.*e*. the intermediate layer, is, among other things, to separate the first and second layers of insulating material from each other. Preferably, the third layer of insulating material prevents the passage of a fluid material, such as molten bitumen, between the second and first layers of insulating material. Furthermore, the third layer of insulating material advantageously distributes and/or reduces the thermal stress on the first layer of insulating material when the second layer of insulating material is subjected to heat. In an advantageous embodiment, the third layer of insulating material is a heat resistant layer with a fibre structure. In an embodiment, the third layer of insulating material is fibre-reinforced fabric.

In an embodiment, the third layer of insulating material is first attached to the second layer of insulating material and then to the first layer of insulating material.

In an embodiment, the third layer of insulating material is attached at least partly to the first layer of insulating material by gluing. In an advantageous embodiment, the glue is a two-component solvent-free fire-classified polyurethane glue.

In an embodiment, the surface area of the second layer of insulating material is larger than the surface area of the first layer of insulating material, and the second layer of insulating material protrudes over the edge of the core on at least one side of the element, forming a joint zone. In an embodiment, the joint zone is provided with a releasable protective film.

The insulator element according to the invention can be used in various applications. The insulator element is particularly advantageous in the manufacture of roofs.

The different embodiments of the invention provide various advantages over solutions of prior art. There can be one or more of the following advantages in an application depending on its implementation.
- fire resistant structure during both the installation and the use;
- a rain shield is provided for the time of the work in connection with the installation;
- the element is used as a part in the structure or as such for final waterproofing;
- in the final structure, the element reduces significantly the risks of moisture, mould and allergies, in comparison with the most common structures in use;
- the structure bears loadings well and is very effective in all loading classes for conventional roofs;
- using the roof element, a finished roof surface can be obtained very fast;
- the roof element is very strong and simultaneously a structure with light weight that is suitable for use in connection with various bedding and roof frame options.

### Description of the drawings

In the following, the invention will be described in more detail with reference to the appended principle drawings, in which
- Fig. 1: shows an embodiment of an insulator element;
- Fig. 2: shows the embodiment of Fig. 1, seen from the direction of the core;
- Fig. 3: show another embodiment, seen from the direction of waterproofing covering;
- Fig. 4: shows an embodiment comprising two adhesive surfaces;
- Fig. 5: shows an embodiment with tongue-and-groove joints;
- Fig. 6: shows an embodiment with ventilation gaps.

For the sake of clarity, the drawings only show the details necessary for understanding the invention. The structures and details that are not necessary for understanding the invention but are obvious for anyone skilled in the art have been omitted from the figures in order to emphasize the characteristics of the invention.

### Detailed description of the invention

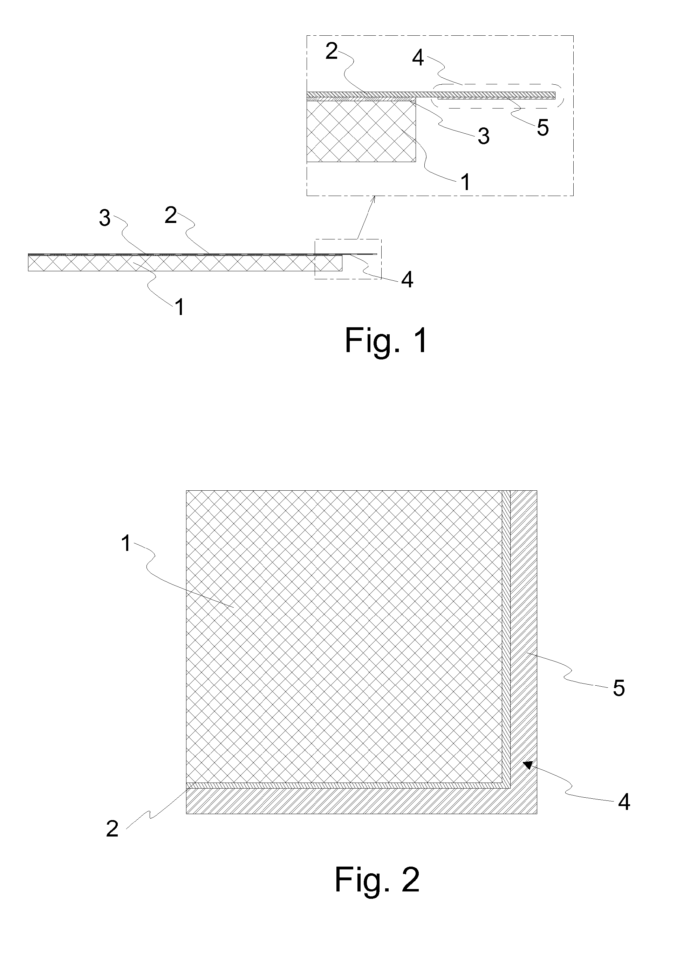

Figure 1 shows an embodiment of an insulator element. The insulator element comprises a first layer 1 of insulation material and a second layer 2 of insulation material. The first layer 1 of insulation material is formed of synthetic polymer material which may comprise plastic materials. The first layer 1 of insulating material may be formed of, for example, expanded polystyrene plastic (EPS), extruded polystyrene (XPS), or polyurethane. In this description, an EPS core is used as an example, and hereinbelow, the term core 1 will be used for the first layer 1 of insulation material. Typically, the thickness of the core 1 is 50 to 250 mm, depending, among other things, on the desired thermal insulation property.

The second layer 2 of insulating material is, in the example, waterproofing covering used for waterproofing. In this description, the waterproofing covering 2 used is bitumen roofing, but also other materials can be applied. Typically, the thickness of the roofing 2 is 1 to 10 mm. The presented solution is advantageous when rubber bitumen roofings are applied, but it can also be used with various modified bitumen roofings as well as other waterproofing coverings 2.

Furthermore, a third layer 3 of insulating material, or an intermediate layer, is provided between the bitumen roofing 2 and the core 1. The third layer 3 of insulating material should have such properties that it is suitable for use with the other materials of the element, such as EPS. It should also bear the thermal stress occurring, for example, in connection with the manufacture of the roof. It is also advantageous that the layer can distribute the thermal stress so that the first layer 1 of insulating material is not subjected to a harmful amount of thermal stress. The third layer 3 of insulating material should also prevent the penetration of possible molten bitumen into the core, for which reason the layer of insulating material should have a certain tightness.

In an advantageous embodiment, the third layer 3 of insulating material is nonwoven fabric. Preferably, the fibre reinforcement consists of glass fibres. In the example, the third layer 3 of insulating material is a kind of a fabric layer that is almost fireproof.

In an embodiment, the third layer 3 of insulating material is a fibre structure that is non-homogeneous with respect to tightness. Thus, part of the fibre structure 3 is denser and part is thinner. The dense part prevents, for example, the protrusion of molten bitumen, and the thinner part constitutes a structure that distributes the thermal stress. Advantageously, the dense part of the fibre structure 3 is placed against the second layer 2 of insulation material, and the thinner part is placed against the core 1.

In an embodiment, the third layer 3 of insulating material is a fibre structure that is coated with mineral material. The fibre structure, preferably glass fibre, constitutes a support structure for the layer 3 of insulation material. Of the mineral material, in turn, a dense surface is formed to prevent the propagation of substances between the second 2 and first 1 layers of insulating material.

The structure of the third layer 3 of insulation material, or the intermediate layer, may also be different from those presented above. It may also be formed of several plies, wherein the tightness and the properties of distributing the thermal stress can be influenced by the different plies, if necessary. For example, one ply of the intermediate layer 3 may be dense and another may distribute the thermal stress. The third layer 3 of insulation material, or the intermediate layer, can thus be formed of a single material or several materials.

The thickness of the third layer 3 of insulation material advantageously corresponds to the thickness of the bitumen roofing, or it is thinner than the bitumen roofing 2. Typically, the thickness of the third layer 3 of insulation material is 0.5 to 5 mm. The third layer 3 of insulation material is considerably thinner than the wool layers used in known roof structures to be built on site, which have a thickness of several centimetres. With a thin layer 3 of insulation material, a firm and non-embedded structure is obtained.

In the embodiments of Figs. 1 and 2, the surface area of the bitumen roofing 2 is greater than the surface area of the core 1. Figure 2 shows an embodiment in which the bitumen roofing 2 protrudes over the edge of the core 2 on two sides of the element, forming joint zones 4. The joint zones 4 may be provided on one side or several sides. Elements placed next to each other by means of the joint zones 4 can be connected to each other. It is also possible to implement an element without the joint zones 4.

In one embodiment, the joint zone 4 is equipped with an adhesive surface 5 protected by a releasable protective film. In the insulator element of Figs. 1 and 2, the adhesive surface 5 is placed on the joint zone 4, underneath the bitumen roofing 2, that is, on that side of the bitumen roofing that is placed against the core 1. In the figures, the adhesive surface 5 is shown as a thick layer for the sake of illustration, but its thickness may be, for example, 0.1 to 10 mm, depending on the application. In connection with the installation of the elements, the adhesive surface 5 of the joint zone 4 of the first element is attached to the upper surface of the second element.

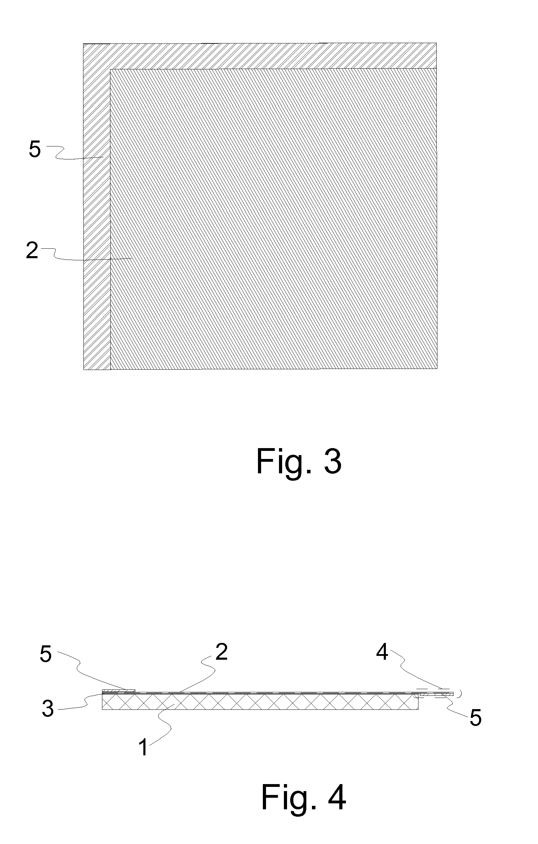

In the insulator element according to Fig. 3, the adhesive surface 5 is provided on the top surface of the element, that is, on that side of the element that is covered by the bitumen roofing 2. In the bitumen roofing, 2, the adhesive surfaces 5 are provided in the edge areas of the element, on those sides of the element where the bitumen roofing does not protrude over the edge of the core 1. Thus, in connection with the installation of the elements, the joint zone 4 of the first element is connected to the adhesive surface 5 on the top surface of the second element.

In the application shown in Fig. 4, the adhesive surfaces 5 are placed on both the lower surface of the joint zone 4 (as shown in Figs. 1 and 2) and on the top surface of the element (as shown in Fig. 3). In connection with the installation of the elements, the adhesive surface 5 of the joint zone 4 of the first element is joined to the adhesive surface 5 on the top surface of the second element.

Protective films are provided to protect the adhesive surfaces 5 preferably during the manufacture of the element. The protective films are released before the element is connected to another element. The purpose of the protective film is to protect the adhesive surface 5 and to prevent unintentional adhesion.

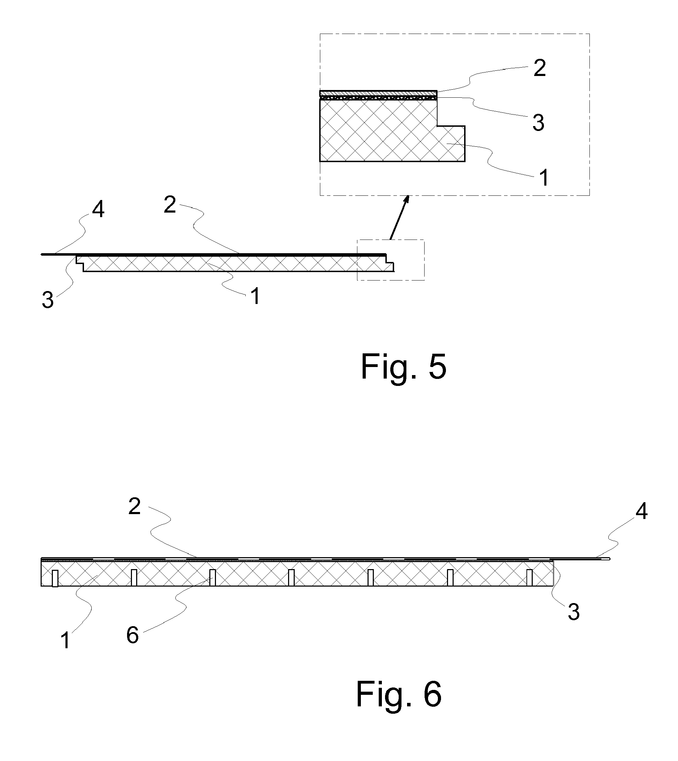

The edges of the core 1 can also be shaped in various ways. Figure 5 shows one way of providing the edges with a spacing out. The spacings of the elements to be placed adjacent to each other are interlocked. In this way, the structure becomes tighter and firmer. It is also possible to use other tongue-and-groove patterns in the joints.

Figure 6 shows an element equipped with air slots and/or ventilation gaps 6 (hereinbelow, the term air slot 6 will be used). Through the air slots 6, moisture can be removed from the structures. The element can be provided with the air slots 6, for example, by forming grooves on one flank of the core 1. Advantageously, said flank is on another side of the core 1 than the side equipped with the bitumen roofing 2. If necessary, the core 1 can be provided with one or more insulator plates (for example, EPS plates), wherein the insulating property of the element is improved. Thus, the air slots 6 remain inside the element, so that air can be circulated through the slots inside the element, and possible moisture can be removed. It is also possible to arrange the air slots 6 on that side of the core 1 that is against the other layers of insulating material. In this case, the air slots 6 may be provided, for example, between the core 1 and the third layer 3 of insulating material.

The insulating element is formed of the second layer 2 of insulating material (in the example, a layer of bitumen roofing) and the third layer 3 of insulating material (in the example, a fabric layer), which fabric layer is placed between the core 1 and the layer of bitumen roofing. In an advantageous embodiment, the fabric layer 3 is attached first to the layer 2 of bitumen roofing and then to the core 1.

The fabric 3 can be attached to the bitumen roofing 2, for example, by means of the adhesive surface of the bitumen roofing. Preferably, the bitumen roofing 2 is a self-adhesive covering. In an embodiment, the fabric 3 is narrower than the bitumen roofing 2. The part of the bitumen roofing 2 that protrudes over the edge of the fabric 3 is preferably used to form the joint zone 4. In connection with the manufacture, the protective films of the joint zones 4 can also be advantageously attached, for example by the self-adhesive property of the bitumen roofing 2. Such a complex of the bitumen roofing 2 and the fabric 3 can be manufactured separately and attached to the core 1 in the next step of manufacture.

In an embodiment, the fabric layer 3 is attached at least partly to the core 1 by gluing. The glue can be, for example, in the form of stripes or dots. The glue should have such properties that it is suitable for use with the material of the core 1, such as EPS in the example. The glue should also bear the thermal stress occurring in connection with the manufacture of the roof. Furthermore, the glue must not be fire-spreading. In an advantageous embodiment, the glue is a two-component solvent-free fire-classified polyurethane glue.

Advantageously, the manufacture of the element can be performed in so-called cold work steps. Thus, the core 1 made of polymer material is not subjected to unnecessary thermal effects which could impair the properties of the element.

The insulator elements can be used to form, for example, the insulation for a roof as follows. Insulator elements are installed tightly next to each other on top of a roof frame made of, for example, corrugated steel sheets or hollow-core concrete slabs. The insulator elements are installed in such a way that the core 1 is placed towards the bedding and the roof frame, and the bitumen roofing 2 is placed away from the foundation, that is, typically upwards. Insulator elements are advantageously installed next to each other in such a way that the joint zones 4 on the sides of the insulator element are placed on top of such sides of the adjacent insulator elements that are not provided with joint zones. Elements placed next to each other by means of the joint zones 4 can be joined to each other. Advantageously, the adhesive surfaces 5 are used for joining. In an embodiment, the self-adhesive surface of the bitumen roofing 2 is used for joining. The insulator elements are fastened to the roof frame by suitable fasteners.

After this, one or several bitumen roofings are installed on top of the bitumen roofings 2 of the insulator elements. These bitumen roofings are attached to the surface of the elements by hot sealing, for example by heating the bitumen roofing (by welding) or by applying molten bitumen at the temperature of about 190 to 230°C for the gluing. The heated bitumen adheres to the adjacent material. Also, the bitumen roofing of the element is heated in connection with the installation work. During the heating, the bitumen in the second layer 2 of insulating material is softened and may be transformed to a partly fluid state. The purpose of the third layer 3 of insulation material, that is, the fabric in the example, is, among other things, to level out the thermal stress on the surface of the core 1 in connection with the roofing work. A sufficiently tight fabric or another intermediate layer 3 also prevents the running of molten bitumen onto the surface of the core and prevents damage caused by material combinations possibly released from the roofing materials. Furthermore, thanks to the intermediate layer 3, the finished roof structure meets the requirements set in fire classifications for a roof. Preferably, the structure meets the requirements according to the classification B_{roof} (for example, B_{roof}(t2)). The fulfilling of the requirements can be proved by means of a suitable test method, such as a test according to ENV 1187.

Building materials are divided into fire classes on the basis of how they affect the ignition of a fire, its spreading and the production of smoke. For example, EN standards are used as testing methods and for classification. The classes available for building materials, the supplementary conditions relating to smoke production and dripping, as well as the ways of marking them, are disclosed in the decision 2000/147/EU by the Commission. (With reference to roof structures, the fire resistance classes and their notations as well as the criteria for their evaluation are given, for example, in the decision 2001/671 by the European Commission.

In addition to roof structures, the insulator element can also be used in other applications. For example, the insulator element can be used for the insulation of underground walls of buildings. For example, the walls of the basement of a building can be insulated by placing insulator elements on the outer surface of the wall. In this case, the cores 1 of the elements are placed towards the wall, and the waterproofing layer 2 is arranged as the outer surface. In such an application, it is advantageous to provide possible air slots 6 in the element between the first layer 1 of insulation material and the third layer 3 of insulation material, and to arrange them to extend substantially vertically. In this way, moisture that is possibly accumulated can be led into drainage systems.

By combining, in various ways, the modes and structures disclosed in connection with the different embodiments of the invention presented above, it is possible to produce various embodiments of the invention in accordance with the spirit of the invention. Therefore, the above-presented examples must not be interpreted as restrictive to the invention, but the embodiments of the invention may be freely varied within the scope of the inventive features presented in the claims hereinbelow.

## Claims

1. An insulator element comprising at least a first layer (1) of insulating material, which is a thermal insulation formed of synthetic polymer material,
**characterized in that** the element further comprises
- a second layer (2) of insulation material, which is waterproofing, and
- a third layer (3) of insulating material, which is provided between the first (1) and second (2) layers of insulating material, to separate them.

2. The insulator element according to claim 1, **characterized in that** the first layer (1) of insulation material is formed of one of the following materials: expanded polystyrene plastic (EPS), extruded polystyrene (XPS), or polyurethane.

3. The insulator element according to claim 1 or 2, **characterized in that** the second layer (2) of insulation material is bitumen roofing.

4. The insulator element according to any of the preceding claims, **characterized in that** the third layer (3) of insulation material is a heat-resistant layer having a fibre structure.

5. The insulator element according to any of the preceding claims, **characterized in that** the third layer (3) of insulation material is fibre-reinforced fabric.

6. The insulator element according to any of the preceding claims, **characterized in that** the third layer (3) of insulation material is at least partly attached to the first layer (1) of insulation material by a glue that is a two-component polyurethane glue.

7. The insulator element according to any of the preceding claims, **characterized in that** the surface area of the second layer (2) of insulation material is larger than the surface of the first layer (1) of insulation material, and the second layer of insulation material protrudes over the edge of the first layer of insulation material on at least one side of the element, forming a joint zone (4).

8. The insulator element according to claim 7, **characterized in that** the joint zone (4) is equipped with a releasable protective film.

9. A method for forming an insulator element, which insulator element comprises at least a first layer (1) of insulating material, which is thermal insulation formed of synthetic polymer material, **characterized in that** the insulator element is formed of
- a second layer (2) of insulation material, which is waterproofing, and
- a third layer (3) of insulating material, which is placed between the first (1) and second (2) layers of insulating material.

10. The method according to claim 9, **characterized in that** the third layer (3) of insulation material is first attached to the second layer (2) of insulation material.

11. The method according to claim 9 or 10, **characterized in that** the third layer (3) of insulation material is attached at least partly to the second layer (1) of insulation material by gluing.

12. The method according to any of the preceding claims 9 to 11, **characterized in that** the surface area of the second layer (2) of insulation material is larger than the surface of the first layer (1) of insulation material, and the second layer of insulation material protrudes over the edge of the first layer of insulation material on at least one side of the element, forming a joint zone (4).

13. The method according to claim 12, **characterized in that** the joint zone (4) is provided with a releasable protective film.

14. A roof structure formed of insulator elements joined to each other, which insulator element comprises at least a first layer (1) of insulating material which is a thermal insulation formed of synthetic polymer material, **characterized in that** the element also comprises
- a second layer (2) of insulation material, which is waterproofing, and
- a third layer (3) of insulating material, which is provided between the first (1) and second (2) layers of insulating material, to separate them.
